# EUROPÄISCHE PATENTSCHRIFT

(11) **EP 2 181 258 B1**
(45) Veröffentlichungstag und Bekanntmachung des Hinweises auf die Patenterteilung: **30.07.2014**
(21) Anmeldenummer: 08785516.9
(22) Anmeldetag: 13.08.2008
(51) Int. Cl.: F01N 9/00, F01N 11/00, F01N 3/20

(54) **BETRIEBS- UND DIAGNOSEVERFAHREN FÜR EIN SCR-ABGASNACHBEHANDLUNGSSYSTEM**
OPERATING AND DIAGNOSTIC METHOD FOR AN SCR EXHAUST-GAS AFTERTREATMENT SYSTEM
PROCÉDÉ DE FONCTIONNEMENT ET DE DIAGNOSTIC D'UN SYSTÈME SCR DE RETRAITEMENT DES GAZ D'ÉCHAPPEMENT

(30) Priorität: 28.08.2007 DE 102007040439
(43) Veröffentlichungstag der Anmeldung: 05.05.2010
(73) Patentinhaber: Daimler AG, 70327 Stuttgart (DE)
(72) Erfinder: BUSCH, Michael-Rainer, 73061 Ebersbach (DE); HERBSTRITT, Dirk, 76448 Durmersheim (DE); HOFMANN, Uwe, 64385 Reichelsheim (DE)
(74) Vertreter: JENSEN & SON
(86) Internationale Anmeldenummer: PCT/EP2008/006640
(87) Internationale Veröffentlichungsnummer: WO 2009/030346

(56) Entgegenhaltungen:
- EP-A- 1 225 323
- WO-A-2006/067900
- DE-A1- 10 254 843
- FR-A- 2 838 161

## Beschreibung

Die Erfindung betrifft ein Betriebs- und Diagnoseverfahren für ein einen SCR-Katalysator mit Ammoniakspeicherfähigkeit aufweisendes SCR-Abgasnachbehandlungssystem nach dem Oberbegriff des Anspruchs 1.

Aus der DE 102 54 843 A1 ist ein Betriebs- und Diagnoseverfahren für ein einen SCR-Katalysator mit Ammoniakspeicherfähigkeit aufweisendes SCR-Abgasnachbehandlungssystem bekannt, bei welchem ein Signal eines stromab des SCR-Katalysators in einer Abgasleitung der Brennkraftmaschine angeordneten Abgassensors mit einer Empfindlichkeit gegenüber Stickoxid und Ammoniak erfasst wird. Zur Diagnose des SCR-Abgasnachbehandlungssystems wird die Menge an dem SCR-Katalysator zugeführtem Reduktionsmittel verändert und auf einen Fehler erkannt, wenn das Signal des Abgassensors sich nicht wie erwartet ändert.

Das Verfahren gestattet zwar zuverlässig eine Erkennung eines Fehlverhaltens des SCR-Abgasnachbehandlungssystems, ist jedoch relativ unspezifisch.

Aufgabe der Erfindung ist es, ein Betriebs- und Diagnoseverfahren anzugeben, welches einen zuverlässigen Betrieb und eine verbesserte Fehlerbehandlung ermöglicht.

Diese Aufgabe wird durch ein Betriebs- und Diagnoseverfahren mit den Merkmalen des Anspruchs 1 erreicht. In dem erfindungsgemäßen Betriebs- und Diagnoseverfahren für ein SCR-Abgasnachbehandlungssystem mit einem SCR-Katalysator mit Ammoniakspeicherfähigkeit wird stromab des SCR-Katalysators ein Abgassensor mit einer Empfindlichkeit gegenüber Stickoxid und Ammoniak eingesetzt. In einem normalen Betriebsmodus wird dem SCR-Katalysator durch Betätigung einer Harnstoffdosiervorrichtung Ammoniak entsprechend einem Füllstandsmodell für im SCR-Katalysator gespeichertes Ammoniak derart zugeführt, dass der Ammoniakfüllstand des SCR-Katalysators wenigstens annähernd auf einem vorgebbaren Sollwert oder in einem vorgebbaren Sollwertbereich gehalten wird. Durch den Abgassensor mit Empfindlichkeit gegenüber Stickoxid und Ammoniak kann dabei einerseits die Stickoxid-Umsatzfähigkeit des SCR-Abgasnachbehandlungssystems erfasst werden, andererseits kann der für den Stickoxidumsatz maßgebende Ammoniakfüllstand des SCR-Katalysators kontrolliert werden. Auf diese Weise ist sowohl ein optimaler Betrieb des SCR-Abgasnachbehandlungssystems, als auch eine Fehlerdiagnose ermöglicht. Ein ungenügender Stickoxidumsatz bzw. eine Unterdosierung von Harnstoff wird durch eine erhöhte Stickoxidkonzentration erkannt und gegebenenfalls durch Anpassung der Harnstoffdosierung korrigiert. Eine verminderte Ammoniak-Speicherfähigkeit des SCR-Katalysators bzw. eine Überdosierung wird durch eine erhöhte Ammoniakkonzentration erkannt und bei Bedarf ebenfalls durch Anpassung der Harnstoffdosierung korrigiert.

Für einen optimalen Betrieb des SCR-Abgasnachbehandlungssystems ist jedoch eine eindeutige Interpretation des Abgassensor-Signals vorteilhaft, was gelegentlich Schwierigkeiten bereiten kann. Durch die erfindungsgemäße Vorgehensweise, den normalen Betriebsmodus zu unterbrechen, wenn ein einen vorgebbaren ersten Grenzwert überschreitendes Signal des Abgassensors registriert wird, kann diesen Schwierigkeiten begegnet werden. Der erste Grenzwert wird vorzugsweise entsprechend einer kritischen Stickoxid- bzw. Ammoniakkonzentration vorgegeben und liegt vorzugsweise in einem Bereich zwischen 5 ppm und 50 ppm.

Wird der erste Grenzwert im normalen Betriebsmodus nicht überschritten, so arbeitet das SCR-Abgasnachbehandlungssystem ordnungsgemäß und es besteht im Allgemeinen keine Veranlassung, den normalen Betriebsmodus zu unterbrechen. Im Falle eines überschrittenen ersten Grenzwerts wird jedoch eine Störung detektiert, welche erfindungsgemäß weiter analysiert wird. Und zwar wird erfindungsgemäß dann, wenn ein einen vorgebbaren ersten Grenzwert überschreitendes Signal des Abgassensors registriert wird, der normale Betriebsmodus unterbrochen und eine von der Harnstoffdosiervorrichtung eingestellte Harnstoffdosierrate um ein vorgebbares Maß gegenüber dem im normalen Betriebsmodus vorgesehenen Wert erhöht. Nachfolgend wird in einen Diagnosebetriebsmodus gewechselt, wenn das Signal des Abgassensors in einer vorgebbaren Zeitspanne nach Erhöhung der eingestellten Harnstoffdosierrate über einen vorgebbaren, den ersten Grenzwert übersteigenden zweiten Grenzwert hinaus ansteigt. Der Signalverlauf des Abgassensors in Reaktion auf die erhöhte Harnstoffdosierrate wird somit bewertet und es wird anhand der Bewertung entschieden, inwieweit die zunächst detektierte Störung einer weiteren Diagnose bedarf. Bei dem Signal des Abgassensors kann es sich um ein Rohsignal oder ein im Sinne einer üblichen Signalaufbereitung aufbereitetes Ausgangssignal des Abgassensors handeln, welches jedenfalls mit einer Stickoxid- bzw. Ammoniak-Konzentration im Abgas korreliert.

In Ausgestaltung der Erfindung wird in den normalen Betriebsmodus zurückgekehrt, wenn das Signal des Abgassensors in einer vorgebbaren Zeitspanne nach Erhöhung der eingestellten Harnstoffdosierrate unter einen vorgebbaren, unterhalb des ersten Grenzwertes liegenden dritten Grenzwert absinkt. Das Absinken des als mit der Stickoxidkonzentration korrelierend angesehenen Abgassensorsignals ergibt sich als normale Reaktion eines ordnungsgemäß arbeitenden SCR-Abgasnachbehandlungssystems, bei welchem infolge eines gestiegenen Angebots an Harnstoff bzw. Ammoniak ein verbesserter Stickoxidumsatz erfolgt. Das SCR-Abgasnachbehandlungssystem wird daher als prinzipiell in Ordnung angesehen und es werden, absehen von gegebenenfalls vorzunehmenden Anpassungen der Harnstoffdosierung, typischerweise keine weiteren Fehlerbehandlungen vorgenommen.

In weiterer Ausgestaltung wird eine fehlerhaft arbeitende Harnstoffdosiervorrichtung diagnostiziert, wenn das Signal des Abgassensors in der vorgebbaren Zeitspanne in einem den ersten Grenzwert einschließenden vorgebbaren Wertebereich verbleibt. Vorzugsweise ist vorgesehen, in diesem Fall eine diesbezügliche Warnmeldung auszugeben, um eine Wartung der Harnstoffdosiervorrichtung zu veranlassen. In Bezug auf eine hierfür maßgebliche Dimensionierung des Wertebereichs ist es besonders vorteilhaft, wenn in weiterer Ausgestaltung der Erfindung dieser Wertebereich nach oben durch den zweiten Grenzwert und nach unten durch den dritten Grenzwert begrenzt ist. Auf diese Weise wird eine eindeutige Unterscheidbarkeit für zu erwartende Reaktionen des Abgassensors auf eine erhöht eingestellte Harnstoffdosierrate erzielt.

Im Falle eines den zweiten Grenzwert überschreitenden Abgassensorsignals als Reaktion auf eine erhöht eingestellte Harnstoffdosierrate wird zunächst von einer ernsthaften Störung ausgegangen, wobei erfindungsgemäß in den Diagnosemodus gewechselt wird. Im Diagnosebetriebsmodus wird in weiterer Ausgestaltung der Erfindung ein eine aktuelle Stickoxidumsatzaktivität charakterisierender Katalysatorkennwert ermittelt. Vorzugsweise handelt es sich bei dem zu ermittelnden Katalysatorkennwert um einen vorliegenden Stickoxidumsatz oder um eine Katalysatoreigenschaft wie beispielsweise die Ammoniakspeicherkapazität.

Wird eine Abweichung des im Diagnosebetriebsmodus ermittelten Katalysatorkennwerts von einem vorgegebenen Referenzwert ermittelt, so wird in weiterer Ausgestaltung der Erfindung eine Fehlermeldung erzeugt, wenn die Abweichung größer als ein vorgegebener Differenzwert ist. Eine Anpassung des Füllstandsmodells an den geänderten Katalysatorkennwert wird vorzugsweise vorgenommen, wenn die Abweichung kleiner als der vorgegebene Differenzwert und/oder größer als ein vorgegebener zweiter, geringerer Differenzwert ist. Der Referenzwert entspricht dabei zweckmäßig dem Katalysatorkennwert eines SCR-Katalysators in ordnungsgemäßem Zustand. Dabei ist auch der umgekehrte Fall als eingeschlossen zu betrachten, bei welchem der Referenzwert einem grenzwertig fehlerhaften Katalysator entspricht, bei dem bereits die kritische Differenz zu einem ordnungsgemäßen Katalysatorkennwert berücksichtigt ist.

In weiterer Ausgestaltung der Erfindung wird im Diagnosebetriebsmodus vorübergehend ein Brennkraftmaschinenbetrieb mit einer gegenüber dem normalen Brennkraftmaschinenbetrieb erhöhten Stickoxid-Rohemission eingestellt und die Harnstoffdosierrate zeitsynchron vermindert oder auf Null gesetzt. Durch die Erhöhung der Stickoxidzufuhrrate zum Katalysator bei verminderter oder abgeschalteter Harnstoffdosierung bzw. Ammoniakzufuhr und gleichzeitiger Überwachung des Abgassensorsignals kann die Umsatzaktivität des Katalysators diagnostiziert werden. Infolge der zuvor vorgenommenen Erhöhung der Harnstoffzufuhrrate kann dabei davon ausgegangen werden, dass der SCR-Katalysator zu Beginn der erhöhten Stickoxidzufuhrrate optimal mit Ammoniak versorgt ist und diesbezüglich am Bestpunkt betrieben wird. Somit ist für den Test auf Stickoxid-Umsatzaktivität ein eindeutiger Referenzzustand für den SCR-Katalysator gegeben, was eine besonders zuverlässige Diagnose ermöglicht.

In weiterer Ausgestaltung wird der Brennkraftmaschinenbetrieb mit erhöhter Stickoxid-Rohemission beendet und in den normalen Betriebsmodus zurückgekehrt, wenn das Signal des Abgassensors nach Erhöhung der Stickoxid-Rohemission einen vorgebbaren vierten Grenzwert überschreitet. Infolge des erhöhten Stickoxidangebots bei gleichzeitiger Verringerung oder Abschaltung des Ammoniakangebots muss der SCR-Katalysator einen Stickoxidumsatz allein durch zuvor eingespeichertes Ammoniak bestreiten. Ein Aufbrauchen dieses eingespeicherten Ammoniakvorrats führt daher zwangsläufig nach einiger Zeit zu einer vom Abgassensor detektierbaren erhöhten Stickoxidkonzentration in dem den SCR-Katalysator verlassenden Abgas. Für eine Diagnose ist es im Zusammenhang mit dieser erfindungsgemäßen Vorgehensweise besonders bevorzugt, wenn die Zeitspanne bis zum Erreichen des vierten Grenzwerts bzw. die in der Zeitspanne angebotene und/oder umgesetzte Stickoxidmenge bewertet werden. Die innerhalb der Zeitspanne umgesetzte Stickoxidmenge ist proportional zur Menge des in gespeicherter Form vom SCR-Katalysator zur Verfügung gestellten Ammoniaks, weshalb auch die Ammoniakspeicherkapazität des SCR-Katalysators ermittelt und bewertet werden kann.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer Brennkraftmaschine mit einer beispielhaften Ausführungsform eines zugeordneten SCR-Abgasnachbehandlungssystems,
- Fig. 2: ein Diagramm zur Verdeutlichung der Ammoniakspeicherfähigkeit eines SCR-Katalysators,
- Fig. 3: ein Diagramm zur Verdeutlichung der Temperaturabhängigkeit der Ammoniakspeicherfähigkeit eines SCR-Katalysators,
- Fig. 4: ein Diagramm zur Verdeutlichung der Abhängigkeit von Stickoxidumsatz und Ammoniakschlupf vom Ammoniakfüllstand eines SCR-Katalysators,
- Fig. 5: eine schematische Blockbilddarstellung einer vorteilhaften Ausführungsform einer Füllstandsermittlungseinheit zur Ermittlung des Ammoniakfüllstands des dem SCR-Abgasnachbehandlungssystem zugeordneten SCR-Katalysators und
- Fig. 6a bis 6d: Zeitdiagramme für beispielhafte parallele Zeitverläufe für ein Signal S eines dem SCR-Abgasnachbehandlungssystem zugeordneten Abgassensors mit einer Empfindlichkeit gegenüber Stickoxid und Ammoniak, für eine Harnstoffdosierrate D zur Diagnose des SCR-Abgasnachbehandlungssystems, für eine NOx-Rohemission NOxᵣₒₕ einer Brennkraftmaschine zur Diagnose des SCR-Abgasnachbehandlungssystems und für einen NOx-Umsatz U_{NOx} des SCR-Abgasnachbehandlungssystems.

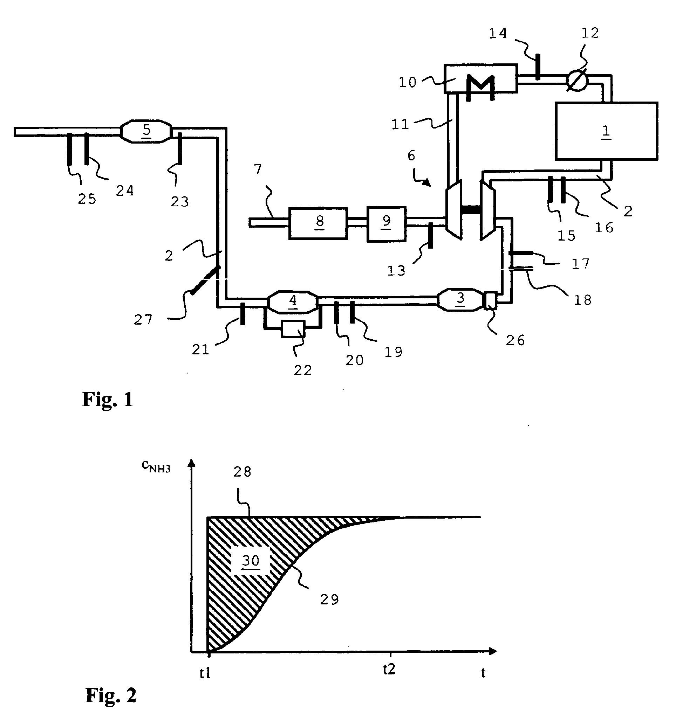

Fig. 1 zeigt beispielhaft ein schematisches Blockbild einer Brennkraftmaschine 1 mit zugehörigem SCR-Abgasnachbehandlungssystem. Die Brennkraftmaschine 1 ist vorzugsweise als luftverdichtende Brennkraftmaschine, nachfolgend vereinfacht als Dieselmotor bezeichnet, ausgebildet. Das vom Dieselmotor 1 ausgestoßene Abgas wird von einer Abgasleitung 2 aufgenommen und durchströmt nacheinander einen Oxidationskatalysator 3, einen Partikelfilter 4 und einen SCR-Katalysator 5. Zur Beheizung des Oxidationskatalysators 3 bzw. des Abgases kann optional ein Heizelement 26 eingangsseitig des Oxidationskatalysators 3 in der Abgasleitung 2 angeordnet sein. Alternativ oder zusätzlich zum Heizelement 26 kann auch eine Brennstoffzugabeeinrichtung stromauf des Oxidationskatalysators 3 vorgesehen sein. Eine Aufheizung des Abgases durch das Heizelement 26 und oder durch exotherme Oxidation von zugegebenem Brennstoff durch den Oxidationskatalysator 3 kommt insbesondere bei einer Regeneration des Partikelfilters 4 durch Rußabbrand in Betracht. Zur Feststellung der Notwendigkeit einer solchen Regeneration ist dem Partikelfilter 4 ein Differenzdrucksensor 22 zugeordnet, über dessen Ausgangssignal eine kritische Partikelbeladung des Partikelfilters 4 ermittelt werden kann. Eine Abgasaufheizung kann jedoch auch in Verbindung mit einem Kaltstart oder Warmlauf des Dieselmotors 1 und/oder generell dann vorgesehen sein, wenn ein zu niedriges Abgastemperaturniveau insbesondere eingangsseitig des SCR-Katalysators 5 festgestellt wird. Durch den Oxidationskatalysator 3 ist außerdem eine Erhöhung des Stickstoffdioxidanteils von im Abgas enthaltenen Stickoxiden ermöglicht. Dadurch ist einerseits eine Oxidation von im Partikelfilter 4 abgelagertem Ruß bei Abgastemperaturen unterhalb von 500 °C, als auch ein verbesserter Stickoxidumsatz im SCR-Katalysator 5 ermöglicht.

Dem Dieselmotor 1 ist ferner ein Abgasturbolader 6 zugeordnet, dessen Turbine vom Abgasstrom angetrieben wird und dessen Verdichter über eine Ansaugluftleitung 7 angesaugte Luft über eine Luftzufuhrleitung 11 dem Dieselmotor 1 zuführt. Zur Einstellung der dem Dieselmotor 1 zugeführten Luftmenge ist in der Luftzufuhrleitung 11 eine Drosselklappe 12 angeordnet. Zur Reinigung der Ansaugluft bzw. zur Messung der Ansaugluftmenge sind ein Luftfilter 8 bzw. ein Luftmassenmesser 9 in der Ansaugluftleitung 7 angeordnet. Ein in der Luftzufuhrleitung 11 angeordneter Ladeluftkühler 10 dient zur Kühlung der verdichteten Ansaugluft.

Stromauf des SCR-Katalysators 5 ist eine Zugabestelle mit einem Dosierventil 27 zur Zugabe eines Reduktionsmittels in das Abgas angeordnet. Die Versorgung des Dosierventils 27 mit dem Reduktionsmittel erfolgt mittels einer Dosierpumpe aus einem Behälter, was nicht näher dargestellt ist. Nachfolgend wird davon ausgegangen, dass es sich bei dem Reduktionsmittel um wässrige Harnstofflösung handelt. Es kann jedoch auch ein anderes Reduktionsmittel eingesetzt werden, insbesondere ein Reduktionsmittel, welches Ammoniak (NH₃) in freier oder chemisch gebundener Form enthält. Die Harnstofflösung wird bedarfsgerecht für eine mittels des SCR-Katalysators 5 vorgesehene Stickoxidentfernung dem Abgas über das Dosierventil 27 zudosiert. Im heißen Abgas wird durch Thermolyse und/oder Hydrolyse Ammoniak freigesetzt, welches selektiv bezüglich der Reduktion von im Abgas enthaltenen Stickoxiden wirkt.

Zur Steuerung des Betriebs des SCR-Abgasnachbehandlungssystems sowie des Dieselmotors 1 ist eine in Fig. 1 nicht dargestellte Steuereinrichtung vorgesehen. Zur Erfüllung der vorgesehenen Steuerfunktionen erhält die Steuereinrichtung Informationen über Betriebszustandsgrößen des Dieselmotors 1. Dies können z.B. Informationen über das abgegebene Drehmoment oder die Drehzahl sein. Die Steuereinrichtung umfasst vorzugsweise eine Recheneinheit und eine Speichereinheit sowie eine Ein-Ausgabeeinheit. Dadurch ist die Steuereinrichtung in der Lage, komplexe Signalverarbeitungsvorgänge vorzunehmen und den Betrieb des Dieselmotors 1 sowie des SCR-Abgasnachbehandlungssystems zu erfassen und zu steuern bzw. zu regeln. Hierfür notwendige Kennfelder sind vorzugsweise in der Speichereinrichtung abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Oxidationskatalysators 3, des Partikelfilters 4 und des SCR-Katalysators 5 vorgesehen. Hinsichtlich des SCR-Katalysators 5 betreffen diese Kennfelder insbesondere den Stickoxidumsatz und die Ammoniakspeicherfähigkeit in Abhängigkeit von den hierfür maßgebenden Einflussgrößen.

Die Erfassung der Betriebszustände des Dieselmotors 1 sowie des SCR-Abgasnachbehandlungssystems und der zugeordneten Einheiten erfolgt vorzugsweise mittels geeigneter Sensoren. Beispielhaft sind in Fig. 1 Drucksensoren 13 und 15 für einen Druck vor dem Verdichter und einen Druck vor der Turbine des Turboladers 6 sowie Temperatursensoren 14, 16, 18, 19, 21, 23 und 24 für jeweils eine Temperatur nach dem Ladeluftkühler 10, vor der Turbine, vor dem Oxidationskatalysator 3, vor und nach dem Partikelfilter 4 sowie vor und nach dem SCR-Katalysator 5 dargestellt. Weitere Sensoren, insbesondere zur Erfassung von Abgaskomponenten können ebenfalls vorgesehen sein. Beispielsweise sind ein Lambdasensor 17 sowie ein Stickoxidsensor 20 für den Stickoxidgehalt im Abgas vorgesehen. Insbesondere ist ein gegenüber Stickoxiden und Ammoniak empfindlicher Abgassensor 25 ausgangsseitig des SCR-Katalysators 5 vorgesehen. Der Stickoxidsensor 20 kann auch stromab des Partikelfilters 4 angeordnet sein, befindet sich jedoch vorzugsweise stromauf des Dosierventils 27. Die Signale der Sensoren werden von der Steuereinrichtung verarbeitet, so dass die wesentlichen Zustandsgrößen jederzeit vorliegen und der Betriebspunkt des Dieselmotors 1 falls notwendig so verändert werden kann, dass ein optimaler Betrieb des SCR-Abgasnachbehandlungssystems ermöglicht ist.

Die erläuterte Ausführungsform eines SCR-Abgasnachbehandlungssystems hat sich als besonders vorteilhaft in Bezug auf eine Entfernung der wesentlichen Abgasschadstoffe, insbesondere in Bezug auf Stickoxide und Partikel erwiesen. Gleichwohl können zusätzliche Abgasreinigungskomponenten, wie beispielsweise ein Stickoxidspeicherkatalysator und/oder ein Hydrolysekatalysator vor dem SCR-Katalysator 5 oder ein weiterer Oxidationskatalysator vorgesehen sein. Ebenfalls möglich sind Änderungen der Sensorik in Bezug auf Art, Anzahl und Anordnung der Sensoren.

Nachfolgend werden mit Blick auf den Betrieb des SCR-Katalysators 5 einige wichtige Eigenschaften dieses Katalysators mit Bezug auf die Figuren 2 bis 4 erläutert. Dabei wird davon ausgegangen, dass es sich bei dem SCR-Katalysator 5 um einen typischen SCR-Katalysator mit Ammoniakspeicherfähigkeit handelt. Vorzugsweise ist der SCR-Katalysator 5 als Schichtkatalysator mit einer von einem keramischen Träger getragenen Zeolithschicht ausgebildet. Eine Ausführung als Vollextrudatkatalysator auf der Basis von TiO₂-, WO₃-, V₂O₅ ist ebenfalls möglich.

In Fig. 2 zeigt ein Diagramm zur Ammoniakspeicherfähigkeit, in welchem ein typischer zeitlicher Verlauf C_{NH3}(t) von Ammoniakkonzentrationen c_{NH3} bei einer Beaufschlagung des SCR-Katalysators 5 mit Ammoniak dargestellt ist. Dabei wird davon ausgegangen, dass ein von eingespeichertem Ammoniak freier SCR-Katalysator 5 unter isothermen Bedingungen zum Zeitpunkt t1 mit einem Abgaseingangsstrom vorgegebener und zeitlich konstanter Größe und Ammoniakeingangskonzentration beaufschlagt wird, was durch die Spur 28 wiedergegeben ist. Entsprechend seiner Ammoniakspeicherfähigkeit nimmt im Zeitbereich zwischen t1 und t2 der SCR-Katalysator 5 in zeitlich abnehmendem Maße Ammoniak auf. Dementsprechend bleibt die NH₃-Konzentration in dem den SCR-Katalysator 5 verlassenden Abgasstrom hinter der Eingangskonzentration zurück, was durch die Spur 29 wiedergegeben ist. Zum Zeitpunkt t2 ist der SCR-Katalysator 5 gesättigt, weshalb er keinen weiteren Ammoniak mehr speichern kann und die Spur 29 in die Spur 28 einmündet. Der Ammoniakfüllstand hat dann den Maximalwert von 100 % erreicht. Die dabei vom SCR-Katalysator 5 gespeicherte Ammoniakmenge, welche die absolute Ammoniakspeicherfähigkeit unter den entsprechenden Bedingungen darstellt, wird durch die Größe der Fläche 29 zwischen den beiden Spuren 28, 29 repräsentiert.

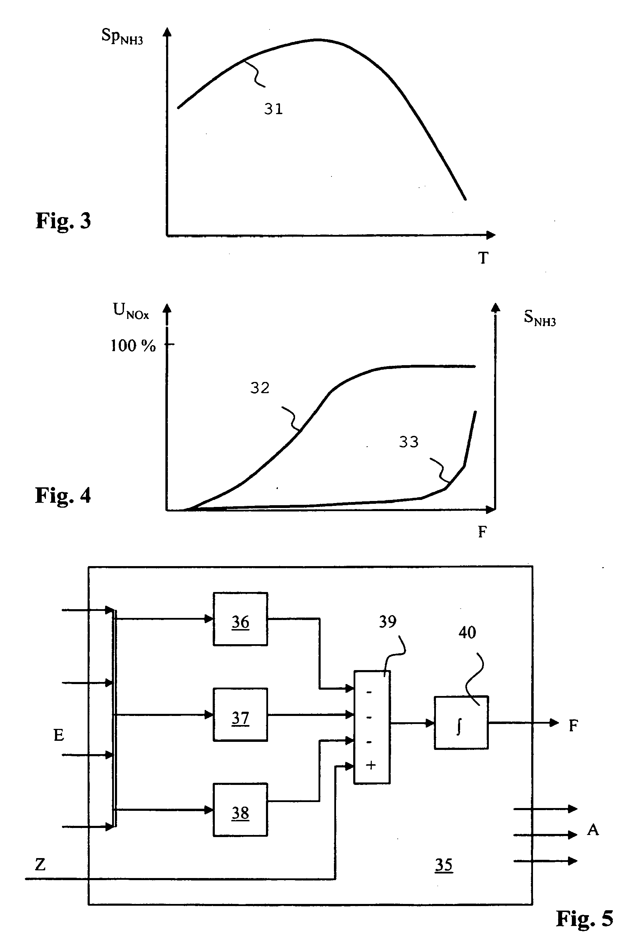

Die Ammoniakspeicherfähigkeit ist in erster Linie temperaturabhängig, was durch das in Fig. 3 dargestellte Diagramm wiedergegeben ist. Dabei stellt die Spur 31 einen typischen Verlauf der tempaturabhängigen Ammoniakspeicherfähigkeit Sp_{NH3} (T) dar. Die Ammoniakspeicherfähigkeit Sp_{NH3} (T) ist, wie dem Diagramm der Fig. 3 zu entnehmen ist, bei niedrigen Temperaturen T vergleichsweise groß und nimmt bei hohen Temperaturen T, etwa oberhalb 300 °C ab. Außerdem besteht eine Abhängigkeit vom Gasdurchsatz, was nicht näher dargestellt ist.

Der Ammoniakfüllstand des SCR-Katalysators kann sowohl als absolute Mengengröße, als auch als relative Größe angegeben werden, welche die gespeicherte Ammoniakmenge bezogen auf die unter den jeweiligen Bedingungen maximal speicherbare absolute Ammoniakmenge gemäß den dargestellten Verhältnissen angibt.

Ein wichtiger Aspekt im Zusammenhang mit den Eigenschaften eines typischen SCR-Katalysators 5 betrifft die Abhängigkeit des Stickoxidumsatzes vom Ammoniakfüllstand. In Fig. 4 ist durch die Spur 32 diese Abhängigkeit schematisch dargestellt. Im Vergleich hierzu ist durch die Spur 33 die Abhängigkeit des Ammoniakschlupfes S_{NH3} vom Ammoniakfüllstand wiedergegeben. Mit zunehmendem Füllstand F steigt dabei der Stickoxidumsatz U_{NOx} (F) mit flacher werdender Steigung kontinuierlich bis zu einen Maximalwert an, der im wesentlichen vom Gasdurchsatz und von der Temperatur bestimmt ist. Dies bedeutet, dass ab einem bestimmten Wert für den Ammoniakfüllstand F der Stickoxidumsatzes U_{NOx} durch eine weitere Einspeicherung von Ammoniak im Katalysator nicht mehr oder nicht mehr wesentlich gesteigert werden kann. Vielmehr erhöht sich, wie durch die Spur 33 dargestellt, der Ammoniakschlupf S_{NH3}. Bei der Einstellung eines für die jeweiligen Bedingungen optimalen Werts für den Ammoniakfüllstand F ist die Berücksichtigung dieser Tatbestände von Bedeutung.

Die in den Figuren 2 bis 4 schematisch dargestellten sowie gegebenenfalls weitere Abhängigkeiten werden zweckmäßigerweise für den einzusetzenden SCR-Katalysator 5 in Form von Kennlinien bzw. Kennfeldern vorgehalten. Auf diese kann die Steuereinrichtung zugreifen, so dass der Zustand des SCR-Katalysators 5 für jeden Betriebszustand umfassend ermittelt werden kann. Dabei ist vorzugsweise vorgesehen, einen Kennfeldsatz für einen ungealterten Neuzustand und einen weiteren Kennfeldsatz für einen definierten Alterungszustand, vorzugsweise entsprechend einer vorgegebenen Grenzalterung, vorzusehen. Besonders vorteilhaft ist es, dem ungealterten Zustand einen ersten Alterungsfaktor von beispielsweise Null und dem Grenzalterungszustand einen zweiten Alterungsfaktor von beispielsweise Eins zuzuordnen. Während des Betriebs des Dieselmotors 1 ist, wie nachfolgend näher erläutert, eine Diagnoseroutine vorgesehen, über welche der aktuelle Alterungszustand des Stickoxid-Reduktionskatalysators 5 von Zeit zu Zeit abgeschätzt wird. Dabei ist vorzugsweise vorgesehen, dem aktuellen Alterungszustand einen aktuellen Alterungsfaktor zuzuordnen, der entsprechend der obigen Definition zwischen Null und Eins liegt. Beim Zugriff auf Kennfelddaten wird dann entsprechend dem aktuellen Alterungsfaktor vorzugsweise linear zwischen den Daten der Kennfeldsätze für den Neuzustand und dem Grenzalterungszustand interpoliert.

Zur Stickoxidentfernung durch den SCR-Katalysator 5 ist es vorgesehen, diesem durch entsprechend gesteuerte Betätigung des Dosierventils 27 Ammoniak gemäß einem Füllstandsmodell für im SCR-Katalysator 5 gespeichertes Ammoniak derart zuzuführen, dass der Ammoniakfüllstand F des SCR-Katalysators 5 wenigstens annähernd auf einem vorgebbaren Sollwert oder in einem vorgebbaren Sollwertbereich gehalten wird. Für das Füllstandsmodell werden vorzugsweise die Abhängigkeiten entsprechend den obigen Erläuterungen berücksichtigt. Dabei werden einerseits ein hoher Stickoxidumsatz U_{NOx} und andererseits ein möglichst geringer oder vernachlässigbarer Ammoniakschlupf S_{NH3} angestrebt bzw. eingestellt. Die Harnstoffdosierrate wird dabei von einer nicht näher dargestellten Harnstoffdosiervorrichtung, welche das Dosierventil 27 und eine Füllstandsermittlungseinheit umfasst, ermittelt.

In Fig. 5 ist eine vorteilhafte Ausgestaltung einer Füllstandsermittlungseinheit 35 zur Ermittlung des Ammoniakfüllstands F des SCR-Katalysators 5 schematisch in Blockbildform dargestellt. Die Füllstandsermittlungseinheit 35 setzt ein rechnerisches Füllstandsmodell unter Rückgriff auf gespeicherte Kennlinien bzw. Kennfelder und Sensorsignalen entsprechend den obigen Erläuterungen um und ermittelt einen aktuellen Ammoniakfüllstand F des SCR-Katalysators 5 sowie Ansteuergrößen, insbesondere zur Ansteuerung des Dosierventils 27. Die Füllstandsermittlungseinheit 35 erhält hierfür Eingabegrößen E, welche neben einem aktuellen Alterungsfaktor beispielsweise sensorisch erfasste Abgaszustandsgrößen wie die Abgastemperatur, den Stickoxidgehalt vor dem SCR-Katalysator 5, und den Abgasmassenstrom betreffen. Weitere relevante Größen, wie insbesondere das Ausgangssignal des Abgassensors 25 werden der Einfachheit halber nicht vollständig aufgezählt. Die Füllstandsermittlungseinheit 35 verfügt über Kennfeldsätze 36, 37, 38 für den Stickoxidumsatz, eine Direktumsetzung von Ammoniak mit Sauerstoff und eine Desorptionsrate (Ammoniakschlupf) von im SCR-Katalysator 5 gespeichertem Ammoniak und gegebenenfalls weitere Kennfelder. Dabei werden die maßgeblichen Daten entsprechend den vorliegenden Eingabegrößen bestimmt. Die einen Ammoniakverbrauch kennzeichnenden Werte, beispielsweise für die Umsetzung mit Stickoxiden, die Direktumsetzung mit Sauerstoff und die durch den Ammoniakschlupf S_{NH3} gegebene Desorptionsrate werden zusammen mit der Zufuhrrate Z des dem Katalysator 5 zugeführten Ammoniaks einem Summationsglied 39 zugeführt, welches die betreffenden Größen vorzeichenrichtig summiert. Auf diese Weise ist eine Bilanzierung für die Größen ermöglicht, welche die im Katalysator 5 gespeicherte Ammoniakmenge im Wesentlichen bestimmen. Die Summation wird dabei vorzugsweise in festgelegten Zeitintervallen im Millisekundenbereich laufend durchgeführt. Der Summenwert wird einem Integrationsglied 40 zugeführt, dessen Ausgangsgröße den aktuellen Ammoniakfüllstand F des Katalysators 5 darstellt. Daneben werden aus den vorliegenden Daten weitere Ausgangsgrößen A ermittelt. Dies sind vor allem Größen betreffend den Stickoxidgehalt des aus dem Katalysator ausströmenden Abgases, den Ammoniakschlupf S_{NH3} sowie die infolge der Reaktionswärme oder durch Wärmeverluste gegebenenfalls veränderte Abgastemperatur.

Die Zufuhrrate Z des dem Katalysator 5 zugeführten Ammoniaks bestimmt sich unter anderem aus der über das Dosierventil 27 abgegebenen Harnstoff-Dosierrate. Dabei kann es vorgesehen sein, Beeinflussungen infolge von Wandanlagerung und -Desorption zu berücksichtigen. Ferner kann eine aus Abgaszustandsgrößen abgeleitete Ammoniakfreisetzungsrate bzw. Hydrolyserate von aus dem zugeführten Harnstoff freigesetztem Ammoniak berücksichtigt werden.

Entsprechend den obigen Erläuterungen ist es ermöglicht, den SCR-Katalysator 5 unter Einsatz des skizzierten Ammoniak-Füllstandsmodells zumindest überwiegend mit einem an die jeweiligen Bedingungen optimal angepassten Ammoniakfüllstand zu betreiben. Dabei wird durch den Abgassensor 25 laufend überwacht, ob bzw. in welcher Größenordnung nicht umgesetzte Stickoxide bzw. ein Ammoniakschlupf in dem aus dem SCR-Katalysator 5 austretenden Abgas vorhanden sind. Üblicherweise wird bei Ausführung des beschriebenen normalen Betriebsmodus das SCR-Abgasnachbehandlungssystem ordnungsgemäß arbeiten, so dass für einen Eingriff in das Modell bzw. für eine Anpassung von Modellparametern keine Veranlassung besteht. Es kann jedoch der Fall auftreten, dass beispielsweise durch Drifterscheinungen oder durch alterungsbedingte Veränderungen des SCR-Katalysators 5 oder durch sonstige zunächst unberücksichtigte Störungen eine Abweichung vom normalen Verhalten eintritt.

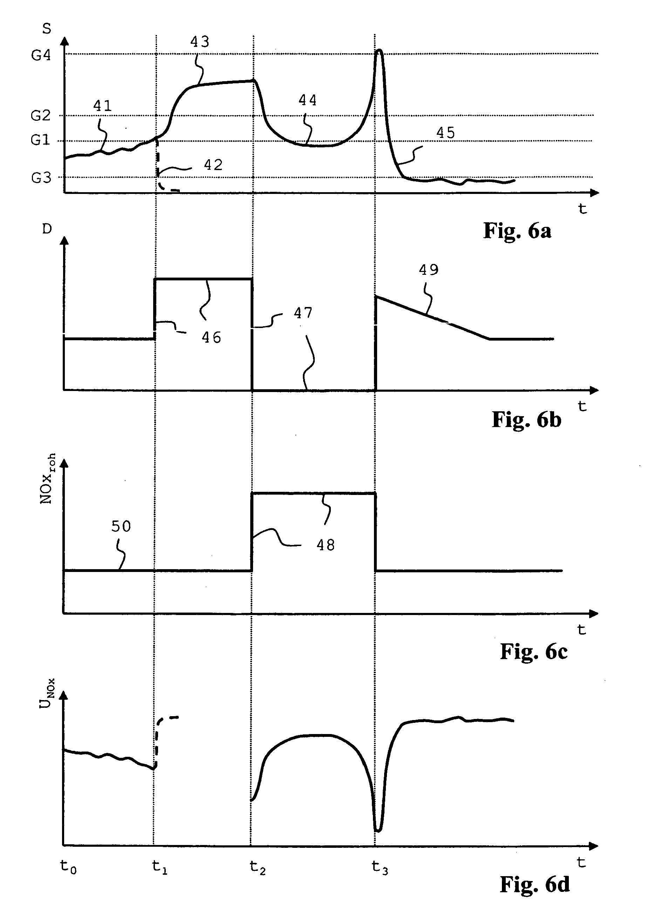

Nachfolgend wird unter Bezug auf die in den Figuren 6a bis 6d dargestellten Zeitdiagramme eine bevorzugte Vorgehensweise zur insbesondere in einem solchen Fall durchgeführten Diagnose erläutert. Dabei ist in Fig. 6a schematisch ein beispielhafter Verlauf eines Signals S des ausgangsseitig des SCR-Katalysators 5 angeordneten Abgassensors 25 mit einer Empfindlichkeit gegenüber Stickoxiden und Ammoniak dargestellt. In den Diagrammen der Figuren 6b, 6c und 6d sind korrespondierende zeitliche Verläufe einer Harnstoffdosierrate D, einer NOx-Rohemission NOxᵣₒₕ des Dieselmotors 1 und eines Stickoxidumsatzes U_{NOx} des SCR-Katalysators 5 bezogen auf die NOx-Rohemission NOxᵣₒₕ des Dieselmotors 1 aufgetragen. Es versteht sich dabei, dass beispielhaft als konstant skizzierte Verläufe auch natürlichen Schwankungen unterworfen sein können.

Ausgehend von einem willkürlich gewähltem Zeitpunkt t₀ wird davon ausgegangen, dass von der Harnstoffdosiervorrichtung ein Sollwert für eine Harnstoffdosierrate D derart eingestellt ist, dass der Ammoniakfüllstand F des SCR-Katalysators gemäß dem Modell innerhalb eines vorgegebenen Bereiches gehalten wird oder zumindest annähernd einen vorgegebenen Wert einnimmt. Dabei wird weiterhin zunächst davon ausgegangen, dass der Sollwert für die Harnstoffdosierrate dem Istwert weitestgehend entspricht, weshalb vereinfacht von einer Harnstoffdosierrate gesprochen wird. Durch Erfassung des Signals S des Abgassensors 25, welches als Konzentrationssignal für den Stickoxidgehalt des Abgases ausgangsseitig des SCR-Katalysators 5 gewertet wird, sowie der Stickoxideingangskonzentration, erhalten aus vom Stickoxidsensor 20 gelieferten Signal oder ausgelesen aus Motorbetriebskennfeldern wird ein aktueller Stickoxidumsatz U_{NOx} ermittelt. Dabei wird vorzugsweise kontrolliert, ob der ermittelte Stickoxidumsatz U_{NOx} modellgemäß entsprechend Fig. 4 mit dem ermittelten aktuellen Ammoniakfüllstand F korreliert. Insofern erfolgt ein Abgleich bzw. eine gegenseitige Plausibilisierung von Parametern des Füllstandsmodells und messtechnisch erfassten Größen und damit eine Überwachung und Diagnose des SCR-Abgasnachbehandlungssystems während des normalen Betriebs. Bei übermäßigen Abweichungen kann eine Anpassung von Modellparametern des Füllstandsmodells oder ein Übergang in einen Diagnosebetriebsmodus vorgesehen sein.

Vorliegend wird jedoch von einem diesbezüglich normalen Verhalten ausgegangen, solange das Signal S unterhalb einem vorgebbaren ersten Grenzwert G1 liegt. Ergibt sich jedoch wie durch den Kurvenast 41 skizziert, ein allmähliches Ansteigen des Signals S, welches zu einem Überschreiten des vorgegebenen ersten Grenzwerts G1 zum angenommenen Zeitpunkt t₁ führt, so wird eine Anomalie des SCR-Abgasnachbehandlungssystems diagnostiziert. Da zunächst unklar ist, auf welcher Ursache die diagnostizierte Anomalie beruht, wird erfindungsgemäß eine Fehlerbehandlungsroutine gestartet, welche eine Eingrenzung bzw. Identifizierung von möglichen Fehlerquellen erlaubt. Insbesondere ist zunächst eine Prüfung dahingehend vorgesehen, ob die Überschreitung des ersten Grenzwerts G1 für das Signal S des Abgassensors 25 durch eine erhöhte Stickoxidkonzentration oder durch einen erhöhten Ammoniakschlupf des SCR-Katalysators 5 verursacht ist. Hierzu wird unmittelbar nach Überschreiten des ersten Grenzwerts G1 zum Zeitpunkt t₁ die eingestellte Harnstoffdosierrate D um ein vorgebbares Maß, beispielsweise um den Faktor 2 erhöht, wie durch den Kurvenast 46 skizziert.

Ergibt sich als Reaktion hierauf innerhalb einer vorgebbaren Zeitspanne von beispielsweise mehreren Sekunden ein Absinken des Signals S unter einen vorgebbaren dritten Grenzwert G3, wie durch den gestrichelten Kurvenast 42 in Fig. 6a verdeutlicht, so ist dadurch verifiziert, dass kein erhöhter Ammoniakschlupf vorlag, da die Erhöhung der Harnstoffdosierrate D in einem solchen Fall den Ammoniakschlupf infolge der dadurch bewirkten erhöhten Ammoniakzufuhr zum SCR-Katalysator 5 hätte verstärken müssen. Das Absinken des Signals S ist vielmehr dahingehend zu bewerten, dass eine erhöhte Stickoxidkonzentration vorlag, was durch die erhöhte Ammoniakzufuhr mit einem Anheben des Ammoniakfüllstands F des SCR-Katalysators und einem dadurch erhöhten Stickoxidumsatz U_{NOx} behoben wurde. Es ist dabei vorzugsweise vorgesehen, für eine sichere Bewertung in dem genannten Sinne für das Absinken des Sensorsignals S den dritten Grenzwert G3 relativ niedrig, vorzugsweise etwa zwischen 2 ppm und 20 ppm anzusetzen.

Als Reaktion auf das Absinken des Abgassensorsignals S auf Werte unterhalb des dritten Grenzwerts G3 ist vorgesehen, zum normalen Betriebsmodus zurückzukehren. Vorzugsweise werden ein oder mehrere Parameter des Füllstandsmodells und/oder Betriebsparameter des SCR-Abgasnachbehandlungssystems angepasst. Beispielsweise kann vorgesehen sein, den aktuell vorliegenden Wert des Ammoniakfüllstands F entsprechend zu korrigieren. Tritt nach einiger Zeit, welche als Kontrollzeit vorgegeben sein kann, abermals die oben geschilderte Anomalie auf, so kann dies als ein Fehler des Dosiersystems, beispielsweise in Form einer fehlerhaft verminderten Dosierrate D interpretiert werden, welche daraufhin korrigiert wird. Eine weitere Wiederholung der Anomalie kann beispielsweise als Fehlfunktion des Dosierventils 27 interpretiert werden und eine entsprechende Meldung ausgegeben werden.

Wird im Anschluss an eine Anpassung eines Parameter des Füllstandsmodells ein verminderter NOx-Umsatz U_{NOx} und/oder ein erhöhter Ammoniakschlupf registriert, so wird dies vorzugsweise als eine Verminderung der katalytischen Aktivität des SCR-Katalysators 5 interpretiert und es kann ebenfalls eine Ausgabe einer entsprechenden Fehlermeldung vorgesehen sein. Dabei kann durch Vergleich mit den hinterlegten Kennfeldern die Größe des aktuellen Stickoxidumsatzes U_{NOx} jederzeit bewertet und beispielsweise der Alterungsfaktor angepasst werden.

Zurückkommend auf die Diagramme der Figuren 6a bis 6d wird nachfolgend die erfindungsgemäß vorgesehene weitere Vorgehensweise erläutert, wenn nach Erhöhung der Harnstoffdosierrate D zum Zeitpunkt t₁ innerhalb einer vorgebbaren Zeitspanne anstelle eines Absinkens des Signals S des Abgassensors 25 unter den dritten Grenzwert Grenzwerts G3 ein Anstieg über einen vorgebbaren zweiten Grenzwert G2 hinaus erfolgt.

In diesem Fall wird davon ausgegangen, dass das zum Zeitpunkt t₁ erhöhte Sensorsignal S auf einen erhöhten Ammoniakschlupf zurückzuführen war. Der SCR-Katalysator hat daher seinen maximalen Ammoniakfüllstand entsprechend der aktuellen Randbedingungen erreicht. Die Erhöhung der Harnstoffdosierrate D zum Zeitpunkt t₁ mit einer entsprechend erhöhten Ammoniakzufuhr führt zu einem weiter vergrößerten Ammoniakschlupf und demzufolge zu einem weiteren Anstieg des ammoniakbedingten Sensorsignals, was durch den Kurvenast 43 beispielhaft skizziert ist. Dabei kann für eine besonders zuverlässige Absicherung des Diagnoseergebnisses der zweite Grenzwert G2 in Abhängigkeit vom Ausmaß der Erhöhung der Harnstoffdosierrate D vorgegeben werden.

Als Reaktion auf die Überschreitung des zweiten Grenzwerts G2 ist vorgesehen, in einen speziellen Diagnosebetriebsmodus zu wechseln, der nach Ablauf einer Verifizierungszeitspanne von beispielsweise etwa 10 Sekunden entsprechend dem in den Diagrammen gekennzeichnetem Zeitpunkt t₂ einsetzt. In diesem Diagnosebetriebsmodus werden die Stickoxid-Rohemission NOxᵣₒₕ des Dieselmotors 1 rasch erhöht und zumindest annähernd zeitsynchron die Harnstoffdosierrate D zumindest vermindert. Vorzugsweise wird die Rohemission drastisch und sprungartig, beispielsweise wenigstens um einen Faktor 2 bis 5 erhöht und die Harnstoffdosierung völlig abgestellt, was durch die Kurvenäste 47 und 48 verdeutlicht ist. Zur Erhöhung der Stickoxid-Rohemission NOxᵣₒₕ des Dieselmotors 1 kommen alle hierfür geeigneten Maßnahmen infrage. Insbesondere ist eine drastische Verminderung oder eine Abschaltung der Abgasrückführung vorgesehen.

Infolge der zuvor erhöhten Harnstoffdosierrate D im Zeitraum zwischen t₁ und t₂ ist sichergestellt, dass der Diagnosebetriebsmodus mit einem Ammoniakfüllstand F von 100 % und einem unter den sonstigen Bedingungen maximalen Stickoxidumsatz U_{NOx} in den Diagnosebetriebsmodus eintritt. Auf diese Weise wird der Diagnosebetriebsmodus mit einem eindeutigem Referenzzustand begonnen. Die Abschaltung der Harnstoffzufuhr hat dabei den Vorteil, dass diesbezüglich ebenfalls ein definierter Zustand geschaffen wird, der eine Verfälschung durch Fehldosierungen ausschließt. Die Erhöhung der Stickoxidbelastung des SCR-Katalysators 5 hat wiederum den Vorteil, dass der Zustand mit an sich überhöhtem Ammoniakfüllstand F rasch beendet wird und nur kurze Zeit vorliegt. Ferner ist sichergestellt, dass das Signal S des Abgassensors 25 eindeutig als durch Stickoxid verursacht interpretiert werden kann.

Infolge der zu Beginn des Diagnosebetriebsmodus geschaffenen Randbedingungen ergibt sich typischerweise zunächst ein Absinken des Sensorsignals S infolge der durch den hohen Ammoniakfüllstand F bedingten Katalysatoraktivität und der daraus resultierenden zunächst vergleichsweise niedrigen Stickoxidkonzentration in dem den SCR-Katalysator 5 verlassenden Abgas. Infolge der bekannten Reaktion von im SCR-Katalysator gespeichertem Ammoniak mit zugeführtem Stickoxid vermindert sich der Ammoniakfüllstand F und damit der Stickoxidumsatz U_{NOx} jedoch zwangsläufig und die Stickoxidkonzentration in dem den SCR-Katalysator 5 verlassenden Abgas steigt wieder an. Somit durchläuft das Sensorsignal S typischerweise ein Minimum, was im Diagramm der Fig. 6a durch den beispielhaft skizzierten Kurvenast 44 gekennzeichnet ist.

Erreicht das Ausgangssignal S des Abgassensors 25 einen vierten Grenzwert G4, was beispielhaft zum Zeitpunkt t₃ der Fall ist, so wird der Diagnosebetriebsmodus beendet und in den normalen Betriebsmodus zurückgekehrt. Der Motorbetrieb mit erhöhter Stickoxidrohemission NOxᵣₒₕ wird beendet und eine entsprechend dem erreichten Ammoniakfüllstand F modellbasierte Harnstoffdosierrate D eingestellt. Letztere kann vorübergehend vergleichsweise groß sein, wird sich jedoch entsprechend den gegebenen Verhältnissen mehr oder weniger rasch einem normalen Wert annähern, was durch einen beispielhaft rampenförmigen Verlauf des Kurvenastes 49 skizziert ist. Dementsprechend nimmt der Stickoxidumsatz U_{NOx} mehr oder weniger rasch wieder einen angestrebten hohen Wert an und das Signal S nimmt wie durch den Kurvenast 45 verdeutlicht ab. Der den Zeitpunkt t₃ bestimmende vierte Grenzwert G4 kann dabei durch einen bestimmten Stickoxidumsatz U_{NOx} von beispielsweise 50 % vorgegeben sein.

Zur Diagnose insbesondere des SCR-Katalysators 5 ist es weiter vorgesehen, die im Zeitintervall von t₂ bis zu t₃ insgesamt umgesetzte Stickoxidmenge zu berechnen. Dies kann beispielsweise durch Integration der vom Abgassensor 25 gelieferten Stickoxidkonzentration im Abgases ausgangsseitig des SCR-Katalysators 5 sowie der Stickoxideingangskonzentration, erhalten aus dem vom Stickoxidsensor 20 gelieferten Signal oder ausgelesen aus Motorbetriebskennfeldern erfolgen. Alternativ oder zusätzlich wird die im Zeitintervall von t₂ bis t₃ insgesamt umgesetzte und im SCR-Katalysator 5 gespeicherte Ammoniakmenge berechnet. Die erhaltenen Werte werden mit aus Kennfeldern oder Kennlinien für einen ungealterten oder einen grenzwertig gealterten Katalysator ermittelten entsprechenden Referenzdaten verglichen. Aufgrund der erfindungsgemäßen Verfahrensführung können sowohl Katalysatorkennwerte, welche den Stickoxidumsatz und damit die Katalysatoraktivität direkt betreffen, als auch solche betreffend die Ammoniakspeicherfähigkeit mit Referenzwerten verglichen werden.

Ergibt der Vergleich, dass der SCR-Katalysator 5 nicht oder unwesentlich geschädigt ist, so ist vorzugsweise vorgesehen, ein oder mehrere Parameter des Füllstandsmodells und/oder Betriebsparameter des SCR-Abgasnachbehandlungssystems anzupassen. Beispielsweise kann vorgesehen sein, die Harnstoffdosierrate D zu korrigieren, um die Wahrscheinlichkeit eines erneut auftretenden übermäßigen Ammoniakschlupfes zu vermindern. Weiterhin kann ein Korrekturfaktor im Integrationsglied 40 der Füllstandsermittlungseinheit 35 verändert werden. Auf diese Weise kann ein zeitliches "Weglaufen" der Integration vermieden werden.

Ergibt ein Vergleich der durch den Diagnosebetrieb erhaltenen Katalysatorkennwerte mit solchen eines ungealterten oder grenzwertig gealterten Katalysators eine Verschlechterung in Bezug auf seine Stickoxidumsatzaktivität oder seine Ammoniakspeicherkapazität, so wird vorzugsweise wie oben erläutert der zur Berücksichtigung der Alterung vorgesehene Alterungsfaktor entsprechend gesetzt. Es kann auch vorgesehen sein, ein fiktives aktives Katalysatorvolumen oder eine Katalysatorlänge zu ermitteln, welche eine Veränderung des SCR-Katalysators gegenüber einem Referenzwert für einen ungealterten oder einen grenzwertig gealterten Katalysator angeben.

Tritt nach Ergreifen einer entsprechenden Korrekturmaßnahme innerhalb einer vorzugsweise vorgebbaren Kontrollzeit erneut die Anomalie eines erhöhten Ammoniakschlupfes auf, so ist vorzugsweise vorgesehen, die entsprechende Korrekturmaßnahme rückgängig zu machen und eine anderweitige, auf eine andere mögliche Fehlerquelle gerichtete Maßnahme zu ergreifen.

Nachfolgend wird auf den Fall eingegangen, dass nach der Erhöhung der Harnstoffdosierrate D zum Zeitpunkt t₁ das Abgassensorsignal S weder über den zweiten Grenzwert G2 hinaus ansteigt, noch unter den dritten Grenzwert G3 absinkt. Bei einer ordnungsgemäß funktionierenden Harnstoffdosiervorrichtung ist bei einer deutlichen und sprunghaften Erhöhung der Harnstoffdosierrate D eine entsprechend deutliche Reaktion des im Verlauf des Signals S zu erwarten. Wenn nach Anlegen von entsprechenden Einstellgrößen für die Harnstoffdosierrate D das Sensorsignal S zwischen dem zweiten Grenzwert G2 und dem dritten Grenzwert G3 verbleibt, liegt daher auf jeden Fall eine Fehlfunktion vor. Erfindungsgemäß wird als wahrscheinlichster Fehler eine Fehlfunktion des Dosiersystems bzw. der Harnstoffdosiervorrichtung diagnostiziert. Aufgrund des Ausbleibens einer angemessenen Reaktion des Abgassensors 25 auf die veränderte Einstellung wird davon ausgegangen, dass diese wegen des Versagens eines die Dosierung betreffenden Bauteils nicht durchgegriffen hat. Bei dem versagen kann es sich beispielsweise um eine Verstopfung oder Fehlfunktion des Dosierventils 27 oder der Dosierpumpe handeln. Zur weiteren Lokalisierung des Fehlers können Folgemaßnahmen vorgesehen sein, mit denen der Betriebszustand dieser Komponenten überprüft wird. Auf jeden Fall ist die Ausgabe einer Warnmeldung betreffend einer Fehlfunktion des Dosiersystems bzw. der Harnstoffdosiervorrichtung vorgesehen, um eine Wartung zu veranlassen.

Generell ist vorgesehen, bei einer Identifizierung jedweden kritischen Fehlerzustandes eine entsprechende Warnmeldung auszugeben, wobei vorzugsweise der identifizierte Fehler spezifiziert wird, wenn dies möglich ist. Dabei ist es ein besonderer Vorteil des erfindungsgemäßen Betriebs- und Diagnoseverfahrens, dass eine Fehlerunterscheidung zumindest in gewissem Umfang bereits während einem normalen Einsatz des Kraftfahrzeugs erfolgen kann. Dies vereinfacht nachfolgende Wartungstätigkeiten. Ein weiterer Vorteil ist eine infolge der Diagnose ermöglichte Ermittlung einer Katalysatoralterung und einer darauf basierenden Anpassung des Füllstandsmodells. Dies ermöglicht über lange Laufzeiten einen in Bezug auf die Abgasreinigung zuverlässigen und wirksamen Betrieb des SCR-Abgasnachbehandlungssystems.

## Patentansprüche

1. Betriebs- und Diagnoseverfahren für ein einen SCR-Katalysator (5) mit Ammoniakspeicherfähigkeit aufweisendes SCR-Abgasnachbehandlungssystem einer Brennkraftmaschine (1), bei welchem ein Signal eines stromab des SCR-Katalysators (5) in einer Abgasleitung der Brennkraftmaschine (1) angeordneten Abgassensors (25) mit einer Empfindlichkeit gegenüber Stickoxid und Ammoniak erfasst wird,
**dadurch gekennzeichnet, dass**
- in einem normalen Betriebsmodus dem SCR-Katalysator (5) durch Betätigung einer Harnstoffdosiervorrichtung Ammoniak entsprechend einem Füllstandsmodell für im SCR-Katalysator (5) gespeichertes Ammoniak derart zugeführt wird, dass der Ammoniakfüllstand (F) des SCR-Katalysators (5) wenigstens annähernd auf einem vorgebbaren Sollwert oder in einem vorgebbaren Sollwertbereich gehalten wird, wobei
- wenn ein einen vorgebbaren ersten Grenzwert (G1) überschreitendes Signal (S) des Abgassensors (25) registriert wird, der normale Betriebsmodus unterbrochen und eine von der Harnstoffdosiervorrichtung eingestellte Harnstoffdosierrate (D) um ein vorgebbares Maß gegenüber dem im normalen Betriebsmodus vorgesehenen Wert erhöht wird und nachfolgend in einen Diagnosebetriebsmodus gewechselt wird, wenn das Signal (S) des Abgassensors (25) in einer vorgebbaren Zeitspanne nach Erhöhung der eingestellten Harnstoffdosierrate (D) über einen vorgebbaren, den ersten Grenzwert (G1) übersteigenden zweiten Grenzwert (G2) hinaus ansteigt.

2. Verfahren nach Anspruch 1,
**dadurch gekennzeichnet, dass**
in den normalen Betriebsmodus zurückgekehrt wird, wenn das Signal (S) des Abgassensors (25) in der vorgebbaren Zeitspanne nach Erhöhung der eingestellten Harnstoffdosierrate (D) unter einen vorgebbaren, unterhalb des ersten Grenzwertes (G1) liegenden dritten Grenzwert (G3) absinkt.

3. Verfahren nach Anspruch 1 oder 2,
**dadurch gekennzeichnet, dass**
eine fehlerhaft arbeitende Harnstoffdosiervorrichtung diagnostiziert wird, wenn das Signal (S) des Abgassensors (25) in der vorgebbaren Zeitspanne in einem den ersten Grenzwert (G1) einschließenden vorgebbaren Wertebereich verbleibt.

4. Verfahren nach einem Anspruch 3,
**dadurch gekennzeichnet, dass**
der Wertebereich nach oben durch den zweiten Grenzwert (G2) und nach unten durch den dritten Grenzwert (G3) begrenzt ist.

5. Verfahren nach einem der Ansprüche 1 bis 4,
**dadurch gekennzeichnet, dass**
im Diagnosebetriebsmodus ein eine aktuelle Stickoxidumsatzaktivität (U_{NOx}) charakterisierender Katalysatorkennwert ermittelt wird.

6. Verfahren nach Anspruch 5,
**dadurch gekennzeichnet, dass**
eine Abweichung des im Diagnosebetriebsmodus ermittelten Katalysatorkennwerts von einem vorgegebenen Referenzwert ermittelt wird und eine Fehlermeldung erzeugt wird, wenn die Abweichung größer als ein vorgegebener Differenzwert ist.

7. Verfahren nach einem der Ansprüche 1 bis 6,
**dadurch gekennzeichnet, dass**
im Diagnosebetriebsmodus vorübergehend ein Brennkraftmaschinenbetrieb mit einer gegenüber dem normalen Brennkraftmaschinenbetrieb erhöhten Stickoxid-Rohemission (NOxᵣₒₕ) eingestellt und die Harnstoffdosierrate (D) zeitsynchron vermindert oder auf Null gesetzt wird.

8. Verfahren nach Anspruch 7,
**dadurch gekennzeichnet, dass**
der Brennkraftmaschinenbetrieb mit erhöhter Stickoxid-Rohemission (NOxᵣₒₕ) beendet und in den normalen Betriebsmodus zurückgekehrt wird, wenn das Signal (S) des Abgassensors (25) nach Erhöhung der Stickoxid-Rohemission (NOxᵣₒₕ) einen vorgebbaren vierten Grenzwert (G4) überschreitet.

## Claims

1. Operating and diagnostic method for an SCR exhaust gas aftertreatment system of an internal combustion engine (1), having an SCR catalyst (5) with ammonia storage capacity, wherein a signal of an exhaust gas sensor (25) with sensitivity to nitric oxide and ammonia arranged downstream of the SCR catalyst (5) in an exhaust gas pipe of the internal combustion engine (1) is detected,
**characterised in that**
- during normal operating mode, by activating a urea dosing device, ammonia corresponding to a fill level model for ammonia stored in the SCR catalyst (5) is fed to the SCR catalyst (5) in such a way that the ammonia fill level (F) of the SCR catalyst (5) is maintained at least approximately at a predefinable target value or in a predefinable target value range, wherein
- if a signal (S) of the exhaust gas sensor (25) exceeding a predefinable first threshold value (G1) is recorded, the normal operating mode is interrupted and a urea dosing rate (D) set by the urea dosing device is increased by a predefinable extent in relation to the value provided in the normal operating mode and there is a subsequent switch to a diagnostic operating mode if the signal (S) of the exhaust gas sensor (25) in a predefinable time period after increasing the set urea dosing rate (D) increases beyond a predefinable second threshold value (G2) exceeding the first threshold value (G1).

2. Method according to claim 1,
**characterised in that**
there is a return to the normal operating mode if the signal (S) of the exhaust gas sensor (25) in the predefinable time period after increasing the set urea dosing rate (D) falls below a predefinable third threshold value (G3) lying below the first threshold value (G1).

3. Method according to claim 1 or 2,
**characterised in that**
a defectively working urea dosing device is diagnosed if the signal (S) of the exhaust gas sensor (25) remains in the predefinable time period in a predefinable value range including the first threshold value (G1).

4. Method according to claim 3,
**characterised in that**
the value range is upwardly delimited by the second threshold value (G2) and downwardly limited by the third threshold value (G3).

5. Method according to one of the claims 1 to 4,
**characterised in that**
a catalyst value characterising a current nitric oxide conversion activity (U_{NOx}) is determined in the diagnostic operating mode.

6. Method according to claim 5,
**characterised in that**
a deviation of the catalyst value determined in the diagnostic operating mode from a predefined reference value is determined and an error message is generated if the deviation is greater than a predefined differential value.

7. Method according to one of the claims 1 to 6,
**characterised in that**
in the diagnostic operating mode an internal combustion engine operation with a nitric oxide raw emission (NOxᵣₒₕ) which is increased in relation to the normal internal combustion engine operation is temporarily set and the urea dosing rate (D) is reduced or set to zero with time synchronicity.

8. Method according to claim 7,
**characterised in that**
the internal combustion engine operation ends with increased nitric oxide raw emission (NOxᵣₒₕ) and there is a return to the normal operating mode if the signal (S) of the exhaust gas sensor (25), after increasing the nitric oxide raw emission (NOxᵣₒₕ), exceeds a predefinable fourth threshold value (G4).

## Revendications

1. Procédé de fonctionnement et de diagnostic pour un système de post-traitement des gaz d'échappement par réduction catalytique sélective de post-traitement dans un moteur à combustion interne (1), ledit système comportant un catalyseur de réduction catalytique sélective (5) à capacité d'accumulation d'ammoniac ; selon l'invention, il est détecté un signal (S) provenant d'un détecteur de gaz d'échappement (25) disposé en aval du catalyseur de réduction catalytique sélective (5) et présentant une sensibilité à l'oxyde d'azote et à l'ammoniac, **caractérisé en ce qu'**en mode de fonctionnement normal, le catalyseur de réduction catalytique sélective (5) est alimenté en ammoniac conformément à un modèle de remplissage d'ammoniac stocké dans le catalyseur de réduction catalytique sélective (5) de manière que le niveau d'ammoniac (F) du catalyseur de réduction catalytique sélective (5) soit au moins maintenu approximativement à une valeur nominale définie ou dans une plage de valeurs nominales définies, le mode de fonctionnement normal étant interrompu lorsqu'un signal (S) du détecteur de gaz d'échappement (25) dépassant une première valeur seuil (G1) déterminée est enregistré, un débit de l'urée réglé par le dispositif de débit d'urée étant augmenté d'une valeur déterminée par rapport à la valeur prévue en mode de fonctionnement normal, et ensuite, on passe à un mode de fonctionnement de diagnostic, lorsque le signal (S) du capteur des gaz d'échappement (25) dans un intervalle de temps défini après l'augmentation du débit de l'urée (D) réglé dépasse une seconde valeur seuil (G2) définie supérieure à la première valeur seuil (G1).

2. Procédé selon la revendication 1, **caractérisé en ce qu'**on revient aux modes de fonctionnement normaux lorsque le signal (S) du capteur des gaz d'échappement (25) est abaissé dans l'intervalle de temps défini après l'augmentation du débit de l'urée (D) réglé sous une troisième valeur seuil (G3) se trouvant en dessous la première valeur seuil (G1).

3. Procédé selon la revendication 1 ou 2, **caractérisé en ce qu'**un dispositif de débit défectueux est diagnostiqué lorsque le signal (S) du capteur des gaz d'échappement (25) reste dans l'intervalle de temps défini dans une plage de valeur définie incluant la première valeur seuil (G1).

4. Procédé selon la revendication 3, **caractérisé en ce que** la plage de valeur est limitée vers le haut par la deuxième valeur seuil (G2) et vers le bas par la troisième valeur seuil (G3).

5. Procédé selon l'une quelconque des revendications 1 à 4, **caractérisé en ce qu'**en mode de fonctionnement de diagnostic il est déterminé une valeur caractéristique de catalyseur caractérisant une réelle activité de conversion de l'oxyde d'azote (Uₙₒₓ).

6. Procédé selon la revendication 5, **caractérisé en ce qu'**un écart de la valeur caractéristique du catalyseur déterminée en mode de fonctionnement de diagnostic est détecté par rapport à une valeur de référence définie et un message d'erreur est généré lorsque l'écart est supérieur à une valeur de différence définie.

7. Procédé selon l'une quelconque des revendications 1 à 6, **caractérisé en ce qu'**en mode de fonctionnement de diagnostic pour une certaine durée un fonctionnement de moteur à combustion interne présentant une émission d'oxyde d'azote (NOxᵣₒₕ) supérieure à celle d'un fonctionnement normal de moteur à combustion interne est réglé et le débit de l'urée (D) est réduit de façon synchrone et réglé sur zéro.

8. Procédé selon la revendication 7, **caractérisé en ce que** le fonctionnement d'un moteur à combustion interne présentant une émission d'oxyde d'azote élevé (NOxᵣₒₕ) se termine et on revient aux modes de fonctionnement normal lorsque le signal (S) du capteur des gaz d'échappement (25) après l'augmentation de l'émission d'oxyde d'azote (NOxᵣₒₕ) dépasse une quatrième valeur seuil définie.
